# EUROPÄISCHE PATENTSCHRIFT

(11) **EP 3 063 855 B1**
(45) Veröffentlichungstag und Bekanntmachung des Hinweises auf die Patenterteilung: **26.01.2022**
(21) Anmeldenummer: 14790551.7
(22) Anmeldetag: 20.10.2014
(51) Int. Cl.: H02K 1/14, H02K 15/00, H02K 1/24, H02K 1/02, H02K 1/27, H02K 17/16

(54) **VERBESSERTE ELEKTROBLECHSTRUKTUR FÜR EINE ELEKTRISCHE MASCHINE**
IMPROVED ELECTRICAL LAMINATED CORE STRUCTURE FOR AN ELECTRIC MOTOR
STRUCTURE DE TÔLE ÉLECTRIQUE AMÉLIORÉE POUR UNE MACHINE ÉLECTRIQUE

(30) Priorität: 28.10.2013 DE 102013221787
(43) Veröffentlichungstag der Anmeldung: 07.09.2016
(73) Patentinhaber: Bayerische Motoren Werke Aktiengesellschaft, 80809 München (DE)
(72) Erfinder: EBERT, Matthias, 80807 München (DE); GOETZ, Georg, 84439 Steinkirchen (DE)
(86) Internationale Anmeldenummer: PCT/EP2014/072392
(87) Internationale Veröffentlichungsnummer: WO 2015/062884

(56) Entgegenhaltungen:
- WO-A1-92/22121
- WO-A1-92/22121
- JP-A- S57 199 461
- US-A- 1 049 506
- US-A- 3 068 373
- US-A- 3 068 373
- US-A- 4 409 506
- US-A- 4 409 506
- US-A- 5 422 527
- US-A- 5 422 527
- US-A1- 2013 119 816

## Beschreibung

Die vorliegende Erfindung betrifft eine verbesserte Elektroblechstruktur, die einerseits kostengünstig ist und andererseits den Wirkungsgrad und/oder die Drehmomentabgabe einer elektrischen Maschine verbessert. Derartige Elektrobleche werden in einer elektrischen Maschine, beispielsweise in einer Synchronmaschine, in einer Asynchronmaschine, in einer Reluktanzmaschine etc., eingesetzt, um den magnetischen Fluss zu leiten. Herkömmliche Statoren und Rotoren einer elektrischen Maschine umfassen aufeinander geschichtete Elektrobleche. Derartige Elektrobleche umfassen eine Eisen-Silizium-Legierung. Einige Bereiche des Elektroblechs werden vom magnetischen Fluss stärker durchflutet als andere Bereiche, beispielsweise aufgrund geometrischer und baulicher Gegebenheiten. In diesen Bereichen tritt bei einer größeren Belastung der elektrischen Maschine eine Sättigung auf, was den Wirkungsgrad reduziert und die Leistung der elektrischen Maschine begrenzt.

Asynchronmaschinen erreichen in der Regel einen schlechteren Wirkungsgrad als permanent erregte Synchronmaschinen, wenn sie aus vergleichbaren Materialien, insbesondere aus den gleichen Elektroblechen, hergestellt sind. Permanent erregte Synchronmaschinen weisen jedoch aufgrund der Magnete höhere Herstellkosten als Asynchronmaschinen auf.

Die DE 10 2006 020 435 A1 schlägt vor, wickelkopfnahe Endbereiche eine Stators bzw. eines Rotors anders auszuführen als die mittleren Bereiche eines Rotors bzw. Stators. Insbesondere sollen die axialen Enden des Rotors bzw. Stators anders ausgeführt sein. Beispielsweise können die axialen Endbereiche Kobalt aufweisen.

Die US 3,068,373 betrifft einen Hysteresemotor. Der Rotor umfasst ein ringförmiges magnetisches Element, das permanent magnetisiert ist. Um das ringförmige magnetische Element ist ein Hystereseelement angeordnet. Das Hystereseelement kann einen Stapel ringförmiger Stanzteile aufweisen. Das ringförmige magnetische Element weist eine hohe Koerzitivität auf. Das Hystereselement weist eine mittlere Koerzitivität auf.

Die US 4,409,506 offenbart ein zylinderförmiges Rotorelement mit einer hohen Leitfähigkeit und einer großen Permeabilität. In dem zylinderförmigen Rotorelement sind axiale Schlitze angeordnet. Der Kern des Rotors umfasst Eisenbleche, die in axialer Richtung laminiert sind. Der Kern ist im zylinderförmigen Rotorelement angeordnet.

Die US 5,422,527 betrifft einen Rotor mit einer Mehrzahl hoch magnetischer Scheiben-Laminationen in einen hohlen Zylinder und Kupferstäbe, die mit einem leitfähigen Material beschichtet sind.

Die WO 92/22121 offenbart einen Rotor mit Zwischenpolen mit einer hohen magnetischen Reluktanz in Umfangsrichtung. Dies wird durch Anordnen der Richtung niedriger Reluktanz der Laminationen in radialer Richtung erreicht.

Die Erfindung stellt sich zur Aufgabe, eine elektrische Maschine zu schaffen, die verbesserte Elektrobleche aufweist.

Die Aufgabe der Erfindung wird durch eine elektrische Maschine nach dem unabhängigen Anspruch 1 gelöst.

Erfindungsgemäß weist die Statorblechstruktur und/oder die Rotorblechstruktur in einer Richtung senkrecht zur Drehachse der elektrischen Maschine einen ersten Bereich mit einer ersten Sättigungsmagnetisierung und einen zweiten Bereich mit einer zweiten Sättigungsmagnetisierung auf, wobei die zweite Sättigungsmagnetisierung höher als die erste Sättigungsmagnetisierung ist. Die Statorblechstruktur und/oder die Rotorblechstruktur weisen in der Richtung senkrecht zur Drehachse der elektrischen Maschine, den ersten Bereich mit einem ersten Ummagnetisierungsverlust und den zweiten Bereich mit einer zweiten Ummagnetisierungsverlust auf, wobei der zweite Ummagnetisierungsverlust niedriger als der erste Ummagnetisierungsverlust ist. Der Ummagnetisierungsverlust wird auch als Eisenverlust bezeichnet. Die Richtung senkrecht zur Drehachse kann auch als radiale Richtung bezeichnet werden.

Erfindungsgemäß wird in ausgewählten Teilbereichen der elektrischen Maschine im Rotor und/oder im Stator im magnetischen Sinne ein höherwertiges Material vorgesehen, das eine höhere Sättigungsmagnetisierung und /oder einen niedrigeren Ummagnetisierungsverlust verglichen mit einem herkömmlichen Material aufweist. Dadurch wird im Magnetkreis eine Verbesserung erzielt, die eine Leistungssteigerung und eine Wirkungsgradsteigerung ermöglicht.

Erfindungsgemäß ist die Statorblechstruktur bzw. die Rotorblechstruktur scheibenförmig ausgebildet. Erfindungsgemäß weist eine derartige scheibenförmige Statorblechstruktur bzw. die Rotorblechstruktur zwei oder mehr Materialien oder unterschiedliche Materialdichten auf.

An Bereichen mit einer höheren magnetischen Flussdichte wird ein magnetisch höherwertiges Material vorgesehen. Dadurch wird die Sättigungsmagnetisierung der gesamten Statorblechstruktur bzw. Rotorblechstruktur im Einsatz in der elektrischen Maschine auf einen höheren Wert gebracht, wodurch eine höhere Leistung bzw. eine höhere Drehmomentabgabe erzielt wird.

Aufgrund der des niedrigeren Ummagnetisierungsverlustes wird ein höherer Wirkungsgrad erzielt.

Ein magnetisch höherwertiges Material weist eine höhere Sättigungsmagnetisierung und/oder einen niedrigeren Ummagnetisierungsverlust auf.

Die Statorblechstruktur, die sich senkrecht zur Drehachse erstreckt, kann beispielsweise aus einem Blech gebildet sein. Auch die Rotorblechstruktur, die sich senkrecht zur Drehachse erstreckt, kann aus einem Blech gebildet sein. Bei einer derartigen Struktur können unterschiedliche Materialien zu einem Blech zusammengefügt werden, beispielsweise mittels Schmelztechniken oder Schweißtechniken. Ferner ist es möglich, innerhalb des Blechs für die Statorblechstruktur bzw. Rotorblechstruktur unterschiedliche Beimischungen beizufügen.

Die Statorblechstruktur, die sich senkrecht zur Drehachse erstreckt, kann beispielsweise aus einer Mehrzahl in einer Ebene angeordneten Blechen gebildet sein. Alternativ hierzu oder zusätzlich kann die Rotorblechstruktur, die sich senkrecht zur Drehachse erstreckt, aus einer Mehrzahl in einer Ebene angeordneten Blechen gebildet sein. Der erste Bereich kann durch ein erstes Blech gebildet sein und der zweite Bereich kann durch ein zweites Blech gebildet sein. Das erste Blech kann neben dem zweiten Blech liegen. Es ist auch möglich, dass das zweite Blech vom ersten Blech vollständig umschlossen wird.

Die elektrische Maschine kann eine Statorblechanordnung aufweisen, die eine Mehrzahl von Statorblechstrukturen aufweist, die in Richtung der Drehachse der elektrischen Maschine parallel zueinander angeordnet sind. Die Stator Blechanordnung kann sich entlang des gesamten Rotors und darüber hinaus erstrecken. Innerhalb der Statorblechanordnung oder um die Statorblechanordnung können die Phasenwicklungen ausgebildet sein. Die Rotorblechanordnung kann eine Mehrzahl von Rotorblechstrukturen aufweisen, die in Richtung der Drehachse der elektrischen Maschine parallel zueinander angeordnet sind. Die Rotorblechanordnung kann sich innerhalb eines Käfigläufers einer Asynchronmaschine befinden. Bei einer Synchronmaschine können Magnete in oder an der Rotorblechanordnung angeordnet sein.

Die zweiten Bereiche mit dem magnetisch höherwertigen Material können Kobalt aufweisen. Eisen mit einem Kobaltanteil weist eine höhere Sättigungsmagnetisierung und einen niedrigeren Ummagnetisierungsverlust als Eisen ohne Kobaltanteil auf.

Die zweiten Bereiche sind erfindungsgemäß an Orten des Stators und/oder des Rotors angeordnet, an denen im Betrieb der elektrischen Maschine eine höhere magnetische Flussdichte herrscht.

Der zweite Bereich kann die Zähne der Stators, einen Teilbereich der Zähne des Stators und/oder einen zylinderförmigen Bereich umfassen, der die Statorzähne verbindet. Alternativ hierzu oder zusätzlich kann der zweite Bereich die Zähne des Rotors, einen Teilbereich der Zähne des Rotors und/oder einen zylinderförmigen Bereich, der die Rotorzähne verbindet, umfassen. Es versteht sich, dass der zweite Bereich einen beliebigen weiteren Bereich umfassen kann, der im Betrieb einem höheren magnetischen Fluss als andere Bereiche des Statorblechs ausgesetzt ist.

Die elektrische Maschine kann eine Asynchronmaschine, eine Synchronmaschine und/oder eine Reluktanzmaschine sein. Besonders bevorzugt ist die elektrische Maschine eine Asynchronmaschine. Die Asynchronmaschine weist den Vorteil auf, dass sie keine Permanentmagnete umfasst und daher kostengünstiger hergestellt werden kann. Ferner werden keine seltenen Erden benötigt. Die Asynchronmaschine hat in der Regel einen schlechteren Wirkungsgrad als eine permanent erregte Synchronmaschine. Der Wirkungsgrad der Asynchronmaschine kann durch die Verwendung der erfindungsgemäßen Rotorblechstruktur bzw. Statorblechstruktur in Richtung der permanent erregte Synchronmaschine verbessert werden, ohne dass seltene Erden eingesetzt werden müssen.

Die Erfindung wird nun unter Bezugnahme auf die Figuren erläutert, die beispielhafte und nicht einschränkende Ausführungsformen der Erfindung zeigen.
Figur 1 zeigt einen Schnitt durch einen Rotor und einen Stator einer Asynchronmaschine gemäß einer ersten Ausführungsform der Erfindung;
Figur 2 zeigt einen Schnitt eines Rotors, der Rotorbleche gemäß einer zweiten Ausführungsform der Erfindung verwendet;
Figur 3 zeigt einen Schnitt durch einen Rotor, der eine Rotorblechstruktur gemäß einer dritten Ausführungsform der Erfindung verwendet; und
Figur 4 zeigt einen Schnitt durch einen Rotor, der eine Rotorblechstruktur gemäß einer vierten Ausführungsform der Erfindung verwendet.

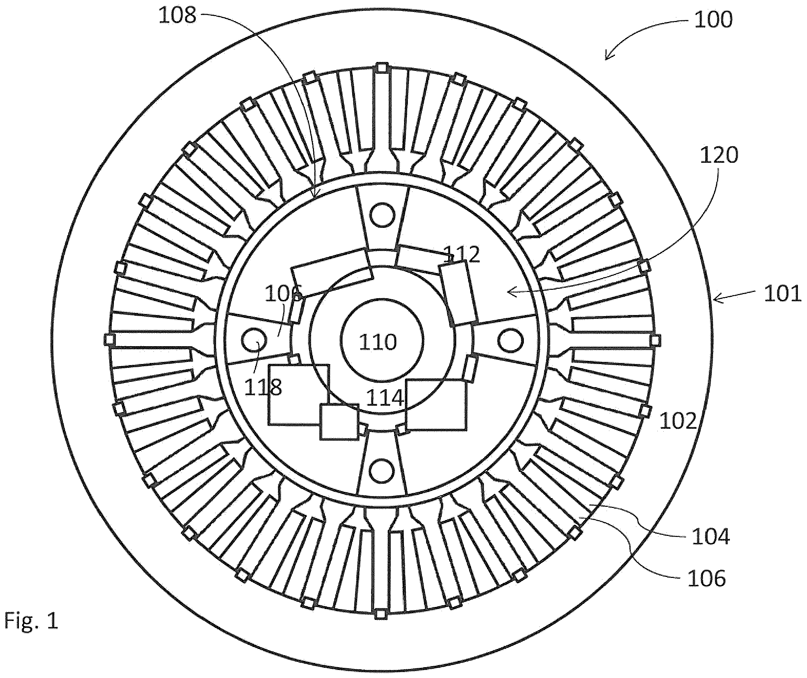

Figur 1 zeigt als erste Ausführungsform der Erfindung eine Asynchronmaschine 100. Die Asynchronmaschine umfasst einen Stator 101 mit einem Statorring 102 und Statorzähnen 104. Um die Statorzähne 104 sind Phasenwicklungen 106 angeordnet. Bei dem in Figur 1 gezeigten Schnitt durch die Asynchronmaschine 100 werden der Statorring 102 und die Statorzähne 104 durch ein so genanntes Elektroblech gebildet.

Die Asynchronmaschine 100 umfasst ferner einen Rotor 108, der innerhalb des Stators 101 angeordnet ist und eine Achse 110 rotatorisch antreibt. Die Achse des Rotors 108 bzw. der Asynchronmaschine 100 verläuft senkrecht zu dem in Figur 1 dargestellten Schnitt durch die Asynchronmaschine 100. Ein Käfigläufer des Rotors umfasst vier Stäbe 118, die sich innerhalb von Ausnehmungen 116 von Elektroblechen 112, 114 befinden.

Die Wicklungen 106 werden erfindungsgemäß mit Drehstrom versorgt, was ein sich um die Achse 110 drehendes Magnetfeld erzeugt. Sobald ein Magnetfeld um die Welle 110 rotiert, werden in den Stäben 118 des Käfigläufers des Rotors 108 Ströme induziert, die ihrerseits ein Magnetfeld erzeugen, das aufgrund der magnetischen Anziehung und/oder magnetischen Abstoßung dazu führt, dass sich der Rotor 108 dreht. Die Arbeitsweise einer Asynchronmaschine ist dem Fachmann bekannt und muss an dieser Stelle nicht weiter beschrieben werden.

In den Zähnen 104 des Stators 101 fließt im Betrieb der Asynchronmaschine 100 ein höherer magnetischer Fluss als im Statorring 102. Daher tritt die Sättigungsmagnetisierung zuerst in den Zähnen 104 des Stators 101 auf, bevor sie im Kreisring 102 des Stators 101 auftritt. Die Sättigungsmagnetisierung begrenzt die Drehmomentabgabe der Asynchronmaschine 100. Erfindungsgemäß haben die Erfinder vorgeschlagen, die Statorzähne 104 mit einem Material auszubilden, das eine höhere Sättigungsmagnetisierung aufweist, als das Material, das für den Statorring 102 vorgesehen ist. Beispielsweise können die Zähne 104 des Stators 101 neben einem ferromagnetischen Material auch Kobalt aufweisen, beispielsweise eine Mischung aus Eisen und Kobalt. Der Statorring 102 und die Zähne können einstückig als eine Statorblechstruktur ausgebildet sein. Es ist aber auch möglich, dass die Zähne 104 und der Statorring 102 aus separaten Blechen hergestellt sind und miteinander verbunden sind.

Am Rotor ist eine Rotorblechstruktur 112, 114 angeordnet, die Ausnehmungen 116 aufweist, innerhalb derer die Stäbe 118 des Käfigläufers angeordnet sind. Innerhalb der Zähne 120 des Rotors 108 herrscht im Betrieb eine höhere magnetische Flussdichte als im Inneren 114 der Rotorblechstruktur. Folglich sind die Zähne 120 der Rotorblechstruktur mit einem Material ausgebildet, das eine höhere Sättigungsmagnetisierung und/oder einen niedrigeren Ummagnetisierungsverlust als das Innere der Rotorblechstruktur 114 aufweist. Die Rotorblechstruktur umfasst einen äußeren zylinderförmigen Bereich 112, in dem Ausnehmungen 116 für die Stäbe des Käfigläufer vorgesehen sind, und einen inneren zylinderförmigen Bereich, der um die Achse 110 angeordnet ist. Der äußere zylinderförmige Bereich 112 und der innere zylinderförmige Bereich 114 können einstückig ausgebildet sein. Es ist auch möglich, dass der äußere zylinderförmige Bereich 112 und der innere zylinderförmige Bereich 114 aus getrennten Blechen ausgebildet sind, die mechanisch miteinander verbunden sind, miteinander verpresst sind, miteinander verschmolzen oder miteinander verschweißt sind. Der äußere zylinderförmige Bereich 112 kann einen höheren Anteil an Kobalt als der innere zylinderförmige Bereich 114 aufweisen. Daher tritt im äußeren zylinderförmigen Bereich 112 die Sättigungsmagnetisierung erst bei einer höheren Flußdichte verglichen mit dem inneren zylinderförmigen Bereich auf, wodurch das Drehmoment der Asynchronmaschine erhöht werden.

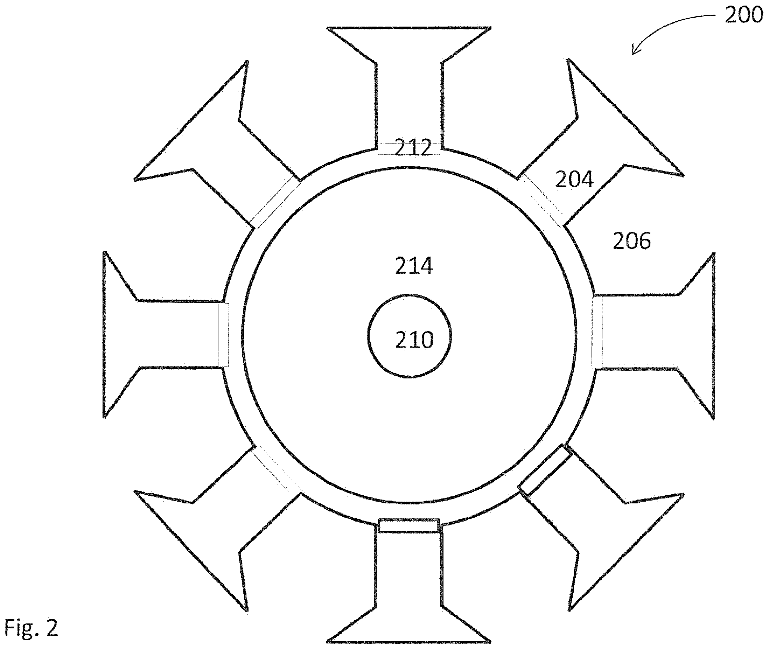

Es wird auf Figur 2 Bezug genommen, die eine zweite Ausführungsform der Erfindung zeigt. Figur 2 zeigt einen Schnitt durch einen Rotor 200. Der Rotor 200 ist an einer Achse 210 gelagert. Der Rotor umfasst erfindungsgemäß eine Mehrzahl Zähne 204, die entlang des Außenumfangs kreisförmig angeordnet sind. Zwischen den Zähnen 204 befinden sich Ausnehmungen 206, in denen je ein Rotorstab oder ein Permanentmagnet angeordnet sein kann. Die in Figur 2 gezeigten Zähne 204 werden durch eine Rotorblechstruktur gebildet, die eine äußere Rotorblechstruktur 212 und eine innere Rotorblechstruktur 114 aufweist, die an der Achse 210 angeordnet ist. Die äußere Rotorblechstruktur umfasst sowohl die Zähne 204 als auch einen zylinderförmige Bereich 212, der um den inneren zylinderförmigen Rotorblechbereich 114 gebildet ist und die Zähne 204 verbindet.

Erfindungsgemäß wird im äußeren Rotorblechbereich ein Material verwendet, das eine höhere Sättigungsmagnetisierung und/oder einen niedrigeren Ummagnetisierungsverlust aufweist als die innere Rotorblechstruktur 214. In den Zähnen 204 und dem zylinderförmigen Bereich 212 der äußeren Rotorblechstruktur ist eine höhere magnetische Flussdichte vorhanden als in der inneren Rotorblechstruktur 214. Dadurch ist es möglich, dass ein höherer magnetischer Fluss durch die Zähne 204 und den zylindrischen Bereich 212 der äußeren Rotorstruktur laufen kann. Durch den höheren magnetischen Fluss werden sowohl die Drehmomentabgabe als auch der Wirkungsgrad erhöht.

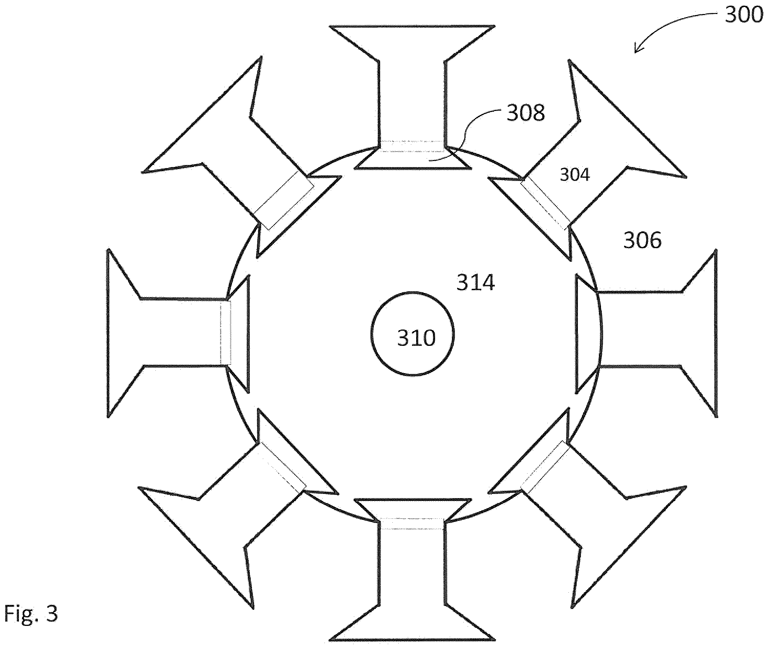

Es wird auf Figur 3 Bezug genommen, die einen Schnitt durch einen Rotor gemäß der dritten Ausführungsform der Erfindung zeigt. Figur 3 zeigt eine Rotorblechstruktur 304, 314, die an einer Achse 310 angeordnet ist. Die Rotorblechstruktur umfasst eine im Wesentlichen zylinderförmige innere Rotorblechstruktur 314, die schwalbenschwanzförmige Ausnehmungen an dem im Wesentlichen kreisförmigen Außenumfang aufweist, in denen je ein Schwalbenschwanzprofil 308 eines Rotorzahnes 304 angeordnet ist. Zwischen den Zähnen 304 bilden sich Leerräume 306, in denen je ein Stab eines Käfigläufers oder ein Magnet angeordnet sein kann. Es versteht sich, dass anstelle eines Magnets auch eine Erregerspule in dem Leerraum 306 angeordnet sein kann.

Die Zähne 304 können aus einem Material gebildet sein, das eine höhere Sättigungsmagnetisierung und/oder einen niedrigeren Ummagnetisierungsverlust als die innere Rotorblechstruktur 314 aufweist. Dadurch lassen sich höhere magnetische Flussdichten in den Zähnen 304 verglichen mit der Rotorblechstruktur realisieren, wodurch die Drehmomentabgabe und/oder der Wirkungsgrad der elektrischen Maschine erhöht werden.

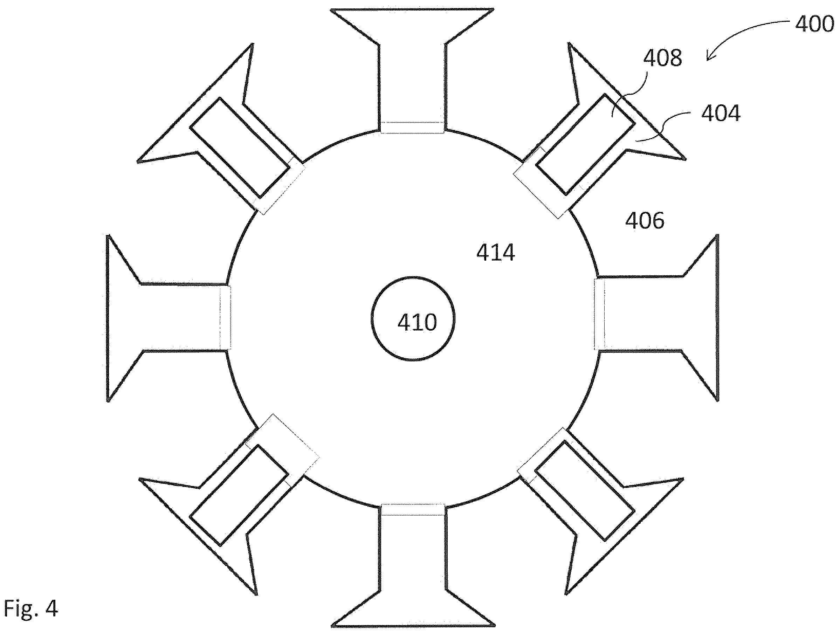

Es wird auf Figur 4 Bezug genommen, die einen Schnitt durch einen Rotor gemäß der vierten Ausführungsform der Erfindung zeigt. Insbesondere zeigt Figur 4 eine Rotorblechanordnung 400, die eine erste im Wesentlichen zylinderförmige Rotorblechstruktur 414 mit Zähnen 404 an deren im Wesentlichen kreisförmigen Umfang zeigt, wobei in den Zähnen 404 Ausnehmungen vorgesehen sind, in denen eine zweite Rotorblechstruktur 408 angeordnet ist. Bei der in Figur 4 dargestellten Ausführungsform weisen ein Teil der Zähne 404, beispielsweise ein Viertel der Zähne, ein Drittel der Zähne, die Hälfte der Zähne, eine Ausnehmung auf, in denen je eine zweite Rotorblechstruktur 408 angeordnet ist. Es ist aber auch möglich, dass alle Zähne 404 eine Ausnehmung aufweisen, in denen je eine zweite Rotorblechstruktur 408 angeordnet ist. Die erste Rotorblechstruktur 414 ist um eine Achse 410 angeordnet.

Die zweite Rotorblechstruktur 408 ist bei der in Figur 4 gezeigten Ausführungsform rechteckig ausgebildet und befindet sich in einer rechteckigen Ausnehmung in dem jeweiligen Zahn 404. Es ist aber auch möglich, dass die zweite Rotorblechstruktur 408 eine andere Form aufweist.

Die zweite Rotorblechstruktur 408 weist ein Material mit einer höheren Sättigungsmagnetisierung und/oder einem niedrigeren Ummagnetisierungsverlust als das Material der ersten Rotorblechstruktur 414 auf. Dadurch können in der zweiten Rotorblechstruktur 408 höhere magnetische Flussdichten erzeugt werden, ohne dass eine Sättigung eintritt. Dadurch kann die Drehmomentabgabe und/oder der Wirkungsgrad der elektrischen Maschine erhöht werden.

Bei der in Figur 4 angezeigten Rotorblechstruktur 400 meist nur jeder zweite Zahn 404 eine Ausnehmung auf, in der die zweite Rotorblechstruktur 408 angeordnet ist. In einer Rotorblechanordnung ist eine Mehrzahl von Rotorblechstrukturen entlang der Achse 410 in axialer Richtung aneinander angeordnet. Eine weitere Ausgestaltung der Erfindung sieht nun vor, dass die erste Rotorblechstruktur 404 in axialer Richtung jeweils immer um einen oder zumindest einen Zahn um die Achse 410 bezogen auf eine benachbarte erste Rotorblechstruktur 404 versetzt angeordnet sind. Folglich sind in der Rotorblechanordnung immer ein Zahn mit Ausnehmung, in der sich die zweite Rotorblechstruktur 408 befindet, und ein Zahn ohne Ausnehmung nebeneinander angeordnet. Dadurch kann vermieden werden, dass die zweite Rotorblechstruktur 408 aus der ersten Rotorblechstruktur 404 herausfällt.

Die zuvor beschriebenen ersten und zweiten Rotorblechstrukturen bzw. inneren und äußeren Rotorblechstrukturen können einstückig oder zweistückig hergestellt sein. Beispielsweise ist es möglich, die innere und äußere Rotorblechstruktur bzw. die erste und zweite Rotorblechstruktur separat herzustellen, beispielsweise durch Stanzen, und durch Schmelzen, Pressen, Formschluss, Punktschweißen oder Schweißen zu verbinden.

Die zweite Rotorblechstruktur und/oder die äußere Rotorblechstruktur, die die höhere Sättigungsmagnetisierung und/oder den niedrigeren Ummagnetisierungsverlust aufweisen, weisen vorzugsweise einen höheren Anteil an Kobalt auf.

Die vorliegende Erfindung hat den Vorteil, dass die Drehmomentabgabe und/oder der Wirkungsgrad einer elektrischen Maschine, insbesondere einer Asynchronmaschine, erhöht werden kann. Die vorliegende Erfindung lässt sich insbesondere bei Asynchronmaschinen, die keine seltenen Erden für Permanentmagnete erfordern, vorteilhaft zum Erhöhen des Drehmomentes und/oder des Wirkungsgrades anwenden.

## Patentansprüche

1. Elektrische Maschine (100), mit
- einem Stator (101), an dem eine Mehrzahl von Phasenwicklungen (106) angeordnet ist, und der zumindest eine Statorblechstruktur (102, 104) aufweist, die sich senkrecht und radial zur Drehachse (110;210;310;410) der elektrische Maschine (100) erstreckt; und
- einem Rotor (108; 200; 300; 400), der zumindest eine Rotorblechstruktur (112, 114; 204, 212, 214; 304,314; 408, 414) aufweist, die sich senkrecht und radial zur Drehachse (110; 210; 310; 410) der elektrische Maschine erstreckt und der eine Mehrzahl von entlang des Außenumfangs des Rotors (108,200,300,400) kreisförmig angeordneten Zähnen (204,304,404) mit dazwischen sich befindenden Ausnehmungen (206,306,406), in denen je ein Rotorstab oder ein Permanentmagnet angeordnet ist, aufweist;
wobei die Statorblechstruktur (102, 104) und/oder die Rotorblechstruktur (112, 114; 204, 212, 214; 304,314; 408, 414) in der radialen Richtung senkrecht zur Drehachse (110; 210; 310; 410) der elektrischen Maschine (100), einen ersten Bereich (102,114; 214; 314; 414) mit einer ersten Sättigungsmagnetisierung und einen zweiten Bereich (104, 112; 204, 212, 304; 408) mit einer zweiten Sättigungsmagnetisierung aufweist, wobei die zweite Sättigungsmagnetisierung höher als die erste Sättigungsmagnetisierung ist, und/oder
die Statorblechstruktur (102, 104) und/oder die Rotorblechstruktur (112, 114; 204, 212, 214; 304,314; 408, 414) in der radialen Richtung senkrecht zur Drehachse (110; 210; 310; 410) der elektrischen Maschine (100), einen ersten Bereich (102,114; 214; 314; 414) mit einem ersten Ummagnetisierungsverlust als Eisenverlust und einen zweiten Bereich (104, 112; 204, 212, 304; 408) mit einer zweiten Ummagnetisierungsverlust als Eisenverlust aufweist, wobei der zweite Ummagnetisierungsverlust niedriger als der erste Ummagnetisierungsverlust ist, wobei
die Statorblechstruktur (102,104) oder die Rotorblechstruktur (112,114;204,212,214;304,314;408,414) scheibenförmig ausgebildet ist, wobei eine derartige scheibenförmige Statorblechstruktur (102,104) oder Rotorblechstruktur (112,114;204,212,214;304,314;408,414) zwei oder mehr Materialien oder unterschiedliche Materialdichten aufweist, **dadurch gekennzeichnet, dass** an Bereichen der Statorblechstruktur (102,104) oder der Rotorblechstruktur (112,114;204,212,214;304,314;408,414) mit einer höheren magnetischen Flussdichte im Betrieb der elektrischen Maschine (100) ein verglichen mit einem herkömmlichen Elektroblech aus Eisen-Silizium-Legierung magnetisch höherwertiges Material mit einer höheren Sättigungsmagnetisierung und/oder einem niedrigeren Ummagnetisierungsverlust vorgesehen ist.

2. Elektrische Maschine (100) nach Anspruch 1, **dadurch**
**gekennzeichnet, dass** die Statorblechstruktur (102, 104), die sich senkrecht zur Drehachse (110) erstreckt, aus einem Blech gebildet ist und/oder die Rotorblechstruktur (112, 114; 204, 212, 214; 304, 314; 408, 414), die sich senkrecht zur Drehachse (110; 210; 310; 410) erstreckt, aus einem Blech gebildet ist.

3. Elektrische Maschine (100) nach Anspruch 1, **dadurch**
**gekennzeichnet, dass** die Statorblechstruktur (102, 104), die sich senkrecht zur Drehachse (110) erstreckt, aus einer Mehrzahl in einer Ebene angeordneten Blechen gebildet ist und/oder die Rotorblechstruktur (112, 114; 204, 212, 214; 304,314; 408, 414), die sich senkrecht zur Drehachse (110; 210; 310; 410) erstreckt, aus einer Mehrzahl in einer Ebene angeordneten Blechen gebildet ist.

4. Elektrische Maschine (100) nach Anspruch 3, **gekennzeichnet durch** eine Statorblechanordnung, die eine Mehrzahl von Statorblechstrukturen (102, 104) aufweist, die in der Richtung der Drehachse (110) der elektrischen Maschine parallel zueinander angeordnet sind, und/oder eine Rotorblechanordnung, die eine Mehrzahl von Rotorblechstrukturen (112, 114; 204, 212, 214; 304, 314; 408, 414) aufweist, die in der Richtung der Drehachse (110; 210; 310; 410) der elektrischen Maschine parallel zueinander angeordnet sind.

5. Elektrische Maschine (100) nach einem der Ansprüche 1 bis 4, **dadurch gekennzeichnet, dass** die zweiten Bereiche (104, 112; 204, 212; 304; 408) Kobalt aufweisen.

6. Elektrische Maschine (100) nach einem der Ansprüche 1 bis 5. **dadurch gekennzeichnet, dass** die zweiten Bereiche (104, 112; 204, 212;304; 408) an Orten angeordnet sind, an denen im Betrieb der elektrischen Maschine (100) eine höhere magnetische Flussdichte als an den ersten Bereichen (102, 114; 214; 314; 414) herrscht.

7. Elektrische Maschine (100) nach einem der Ansprüche 1 bis 6, **dadurch gekennzeichnet, dass** der zweite Bereich ferner zumindest einen der folgenden Bereiche umfasst:
- die Zähne der Stators (104);
- die Zähne des Rotors (120; 204; 304);

8. Elektrische Maschine nach einem der Ansprüche 1 bis 7, **dadurch gekennzeichnet, dass** die elektrische Maschine
- eine Asynchronmaschine (100);
- eine Synchronmaschine; und/oder
- eine Reluktanzmaschine
ist.

## Claims

1. Electrical machine (100), comprising
- a stator (101) on which a plurality of phase windings (106) are arranged and which has at least one stator lamination structure (102, 104) which extends perpendicularly and radially with respect to the rotation axis (110; 210; 310; 410) of the electrical machine (100); and
- a rotor (108; 200; 300; 400) which has at least one rotor lamination structure (112, 114; 204, 212, 214; 304, 314; 408, 414) which extends perpendicularly and radially with respect to the rotation axis (110; 210; 310; 410) of the electrical machine and which has a plurality of teeth (204, 304, 404) arranged in a circle along the outer circumference of the rotor (108, 200, 300, 400) and having, between them, recesses (206, 306, 406) in each of which a rotor bar or a permanent magnet is arranged; wherein the stator lamination structure (102, 104) and/or the rotor lamination structure (112, 114; 204, 212, 214; 304, 314; 408, 414) have/has a first region (102, 114; 214; 314; 414) with a first saturation magnetization and a second region (104, 112; 204, 212, 304; 408) with a second saturation magnetization in the radial direction perpendicular with respect to the rotation axis (110; 210; 310; 410) of the electrical machine (100), wherein the second saturation magnetization is higher than the first saturation magnetization, and/or the stator lamination structure (102, 104) and/or the rotor lamination structure (112, 114; 204, 212, 214; 304, 314; 408, 414) have/has a first region (102, 114; 214; 314; 414) with a first remagnetization loss in the form of iron loss and a second region (104, 112; 204, 212, 304; 408) with a second remagnetization loss in the form of iron loss in the radial direction perpendicular with respect to the rotation axis (110; 210; 310; 410) of the electrical machine (100), wherein the second remagnetization loss is lower than the first remagnetization loss, wherein the stator lamination structure (102, 104) or the rotor lamination structure (112, 114; 204, 212, 214; 304, 314; 408, 414) is of disc-like form, wherein a disc-like stator lamination structure (102, 104) or rotor lamination structure (112, 114; 204, 212, 214; 304, 314; 408, 414) contains two or more materials or different material densities, **characterized in that** a material of higher magnetic value compared with a conventional electrical sheet, which is composed of an iron/silicon alloy, and having a relatively high saturation magnetization and/or a relatively low remagnetization loss is provided on regions of the stator lamination structure (102, 104) or of the rotor lamination structure (112, 114; 204, 212, 214; 304, 314; 408, 414) with a relatively high magnetic flux density during operation of the electrical machine (100) .

2. Electrical machine (100) according to Claim 1, **characterized in that** the stator lamination structure (102, 104), which extends perpendicularly with respect to the rotation axis (110), is formed from a metal sheet and/or the rotor lamination structure (112, 114; 204, 212, 214; 304, 314; 408, 414), which extends perpendicularly with respect to the rotation axis (110; 210; 310; 410), is formed from a metal sheet.

3. Electrical machine (100) according to Claim 1, **characterized in that** the stator lamination structure (102, 104), which extends perpendicularly with respect to the rotation axis (110), is formed from a plurality of metal sheets arranged in one plane and/or the rotor lamination structure (112, 114; 204, 212, 214; 304, 314; 408, 414), which extends perpendicularly with respect to the rotation axis (110; 210; 310; 410), is formed from a plurality of metal sheets arranged in one plane.

4. Electrical machine (100) according to Claim 3, **characterized by** a stator lamination arrangement, which has a plurality of stator lamination structures (102, 104) which are arranged parallel to one another in the direction of the rotation axis (110) of the electrical machine, and/or a rotor lamination arrangement, which has a plurality of rotor lamination structures (112, 114; 204, 212, 214; 304, 314; 408, 414) which are arranged parallel to one another in the direction of the rotation axis (110; 210; 310; 410) of the electrical machine.

5. Electrical machine (100) according to one of Claims 1 to 4, **characterized in that** the second regions (104, 112; 204, 212; 304; 408) contain cobalt.

6. Electrical machine (100) according to one of Claims 1 to 5, **characterized in that** the second regions (104, 112; 204, 212; 304; 408) are arranged at locations at which a higher magnetic flux density than on the first regions (102, 114; 214; 314; 414) prevails during operation of the electrical machine (100).

7. Electrical machine (100) according to one of Claims 1 to 6, **characterized in that** the second region further comprises at least one of the following regions:
- the teeth of the stator (104);
- the teeth of the rotor (120; 204; 304).

8. Electrical machine according to one of Claims 1 to 7, **characterized in that** the electrical machine is
- an asynchronous machine (100);
- a synchronous machine; and/or
- a reluctance machine.

## Revendications

1. Machine électrique (100), comprenant
- un stator (101) sur lequel est disposée une pluralité d'enroulements de phase (106), et qui présente au moins une structure de tôle de stator (102, 104) qui s'étend perpendiculairement et radialement par rapport à l'axe de rotation (110 ; 210 ; 310 ; 410) de la machine électrique (100) ; et
- un rotor (108 ; 200 ; 300 ; 400) qui présente au moins une structure de tôle de rotor (112, 114 ; 204, 212, 214; 304, 314; 408, 414) qui s'étend perpendiculairement et radialement par rapport à l'axe de rotation (110; 210; 310; 410) de la machine électrique et qui présente une pluralité de dents (204, 304, 404) disposées en forme de cercle le long de la circonférence extérieure du rotor (108, 200, 300, 400), dotées d'évidements (206, 306, 406) intermédiaires dans lesquels respectivement une barre de rotor ou un aimant permanent est disposé(e) ;
la structure de tôle de stator (102, 104) et/ou la structure de tôle de rotor (112, 114 ; 204, 212, 214 ; 304, 314; 408, 414) présentant dans la direction radiale perpendiculairement à l'axe de rotation (110 ; 210 ; 310 ; 410) de la machine électrique (100) une première zone (102, 114 ; 214 ; 314 ; 414) ayant une première aimantation à saturation et une deuxième zone (104, 112; 204, 212, 304; 408) ayant une deuxième aimantation à saturation, la deuxième aimantation à saturation étant supérieure à la première aimantation à saturation, et/ou
la structure de tôle de stator (102, 104) et/ou la structure de tôle de rotor (112, 114 ; 204, 212, 214 ; 304, 314; 408, 414) présentant dans la direction radiale perpendiculairement à l'axe de rotation (110 ; 210 ; 310 ; 410) de la machine électrique (100) une première zone (102, 114 ; 214 ; 314 ; 414) ayant une première perte par inversion magnétique comme perte dans le fer et une deuxième zone (104, 112 ; 204, 212, 304; 408) ayant une deuxième perte par inversion magnétique comme perte dans le fer, la deuxième perte par inversion magnétique étant inférieure à la première perte par inversion magnétique,
la structure de tôle de stator (102, 104) ou la structure de tôle de rotor (112, 114 ; 204, 212, 214 ; 304, 314 ; 408, 414) étant réalisée en forme de disque, une telle structure de tôle de stator (102, 104) ou structure de tôle de rotor (112, 114 ; 204, 212, 214 ; 304, 314 ; 408, 414) en forme de disque présentant deux ou trois matériaux ou différentes épaisseurs de matériau,
**caractérisée en ce que** dans des zones de la structure de tôle de stator (102, 104) ou de la structure de tôle de rotor (112, 114 ; 204, 212, 214 ; 304, 314 ; 408, 414) ayant une densité de flux magnétique supérieure en cours de fonctionnement de la machine électrique (100), un matériau de meilleure qualité magnétique ayant une aimantation à saturation supérieure et/ou une perte par inversion magnétique inférieure en comparaison avec une tôle électrique conventionnelle en alliage de fer-silicium est prévu.

2. Machine électrique (100) selon la revendication 1, **caractérisée en ce que** la structure de tôle de stator (102, 104) qui s'étend perpendiculairement à l'axe de rotation (110) est formée d'une tôle, et/ou la structure de tôle de rotor (112, 114 ; 204, 212, 214 ; 304, 314 ; 408, 414) qui s'étend perpendiculairement à l'axe de rotation (110 ; 210 ; 310 ; 410) est formée d'une tôle.

3. Machine électrique (100) selon la revendication 1, **caractérisée en ce que** la structure de tôle de stator (102, 104) qui s'étend perpendiculairement à l'axe de rotation (110) est formée d'une pluralité de tôles disposées dans un plan, et/ou la structure de tôle de rotor (112, 114 ; 204, 212, 214 ; 304, 314 ; 408, 414) qui s'étend perpendiculairement à l'axe de rotation (110 ; 210 ; 310 ; 410) est formée d'une pluralité de tôles disposées dans un plan.

4. Machine électrique (100) selon la revendication 3, **caractérisée par** un agencement de tôles de stator qui présente une pluralité de structures de tôles de stator (102, 104) qui sont disposées en parallèle les unes aux autres dans la direction de l'axe de rotation (110) de la machine électrique, et/ou un agencement de tôles de rotor qui présente une pluralité de structures de tôle de rotor (112, 114 ; 204, 212, 214 ; 304, 314 ; 408, 414) qui sont disposées en parallèle les unes aux autres dans la direction de l'axe de rotation (110 ; 210 ; 310 ; 410) de la machine électrique.

5. Machine électrique (100) selon l'une quelconque des revendications 1 à 4, **caractérisée en ce que** les deuxièmes zones (104, 112; 204, 212; 304; 408) présentent du cobalt.

6. Machine électrique (100) selon l'une quelconque des revendications 1 à 5, **caractérisée en ce que** les deuxièmes zones (104, 112 ; 204, 212 ; 304 ; 408) sont disposées à des endroits où en cours de fonctionnement de la machine électrique (100) il règne une densité de flux magnétique supérieure à celle dans les premières zones (102, 114 ; 214 ; 314 ; 414).

7. Machine électrique (100) selon l'une quelconque des revendications 1 à 6, **caractérisée en ce que** la deuxième zone comprend en outre au moins l'une des zones suivantes :
- les dents du stator (104) ;
- les dents du rotor (120 ; 204 ; 304).

8. Machine électrique selon l'une quelconque des revendications 1 à 7, **caractérisée en ce que** la machine électrique est
- une machine asynchrone (100) ;
- une machine synchrone ; et/ou
- une machine à réluctance.
